# EUROPEAN PATENT APPLICATION

(11) **EP 4 585 385 A1**
(43) Date of publication of application: **16.07.2025**
(21) Application number: 23863167.5
(22) Date of filing: 05.09.2023
(51) Int. Cl.: B29B 11/08, B29C 45/06, B29C 45/16, B29C 49/06, B29C 49/64

(54) **DEVICE AND METHOD FOR PRODUCING RESIN CONTAINER**

(30) Priority: 06.09.2022 JP 2022141642; 06.09.2022 JP 2022141526
(71) Applicant: Nissei ASB Machine Co., Ltd., Komoro-shi, Nagano 384-8585 (JP)
(72) Inventor: SATO Soichiro, Komoro-shi, Nagano 384-8585 (JP)
(74) Representative: Mewburn Ellis LLP
(86) International application number: PCT/JP2023/032317
(87) International publication number: WO 2024/053629

(57) **Abstract**

An apparatus for manufacturing a resin container includes: one injection molding unit that injection-molds a bottomed tubular preform as a first resin material; the other injection molding unit that injection-molds an additional structure as a second resin material; a blow molding unit that blow-molds the preform integrated with the additional structure in a state of having residual heat from injection molding to manufacture a resin container; and a conveyor that moves from the one injection molding unit to the other injection molding unit or from the other injection molding unit to the one injection molding unit and conveys the preform integrated with the additional structure to the blow molding unit.

## Description

### Technical Field

The present invention relates to an apparatus and a method for manufacturing a resin container.

### Background Art

Conventionally, a hot parison type blow molding apparatus has been known as one of apparatuses for manufacturing a resin container (hereinafter, it is also simply referred to as a container). The hot parison type blow molding apparatus is configured to blow-mold the container using residual heat from injection molding of a preform, and is advantageous in that a container having more variety and excellent aesthetic appearance than the cold parison type can be manufactured.

As one aspect of the container, a container in which an additional structure such as a handle, a hanging tool, and a clip-type lid is integrated with a container body is also known. In a case where a container of this type is manufactured by the hot parison type blow molding apparatus, a method of insert-molding a handle or the like manufactured in advance at the time of blow molding is known (see, for example, Patent Literatures 1 and 2). In addition, a method of simultaneously molding the corresponding part of the additional structure at the time of injection molding of the preform (see, for example, Patent Literatures 3 to 6) has also been proposed. Note that a hanging tool, a clip-type lid, or the like may be attached to the blow-molded container body.

As another aspect of the above container, a multi-chamber container in which a plurality of containers each having an opening portion is integrated by welding at a body portion, and different types of contents can be separately stored is known (see, for example, Patent Literatures 7 to 11).

### Citation List

### Patent Literature

Patent Literature 1: Japanese Patent No. 3616484
Patent Literature 2: JP 8-169059
Patent Literature 3: JP 2009-529437 A
Patent Literature 4: WO 00/051902 A
Patent Literature 5: Japanese Patent No. 3098412
Patent Literature 6: Japanese Patent No. 4425018
Patent Literature 7: Japanese Patent No. 4044507
Patent Literature 8: Japanese Patent No. 4176598
Patent Literature 9: Japanese Patent No. 6120703
Patent Literature 10: JP 5-001129 A
Patent Literature 11: Japanese Patent No. 6621632

### Summary of Invention

### Technical Problem

In manufacturing a container in which an additional structure is integrated with a container body, when the additional structure manufactured separately from the container body is integrated with the container body, a special step or equipment is required for attaching the additional structure in addition to equipment for manufacturing the container body. Therefore, the manufacturing step of the container becomes complicated, and the manufacturing equipment of the container also becomes large. In addition, in the case of forming the corresponding part of the additional structure at the time of injection molding of the preform, the additional structure is made of the same material as that of the container body, so that there are restrictions and the difficulty of manufacturing the container is also high.

Meanwhile, in the conventional method for manufacturing a multi-chamber container by the hot parison method, the multi-chamber container can be manufactured when colors, materials, shapes, and the like of a plurality of containers constituting the multi-chamber container are common. However, the above manufacturing method cannot cope with a case where characteristics such as color, material, and shape are different among a plurality of containers constituting the multi-chamber container.

Therefore, the present invention has been made in view of such problems, and it is an object of the present invention to provide a manufacturing apparatus capable of molding the additional structure and the container body using different materials, and relatively easily manufacturing a container in which the additional structure is integrated with the container body or a resin multi-chamber container in which a plurality of containers having different characteristics are integrated.

### Solution to Problem

An apparatus for manufacturing a resin container according to an aspect of the present invention manufactures a resin container having a container body and an additional structure integrated with the container body. The apparatus for manufacturing a resin container includes: one injection molding unit that injection-molds a bottomed tubular preform as a first resin material; the other injection molding unit that injection-molds an additional structure as a second resin material; a blow molding unit that blow-molds the preform integrated with the additional structure in a state of having residual heat from injection molding to manufacture the resin container; and a conveyor that moves in the order from the one injection molding unit to the other injection molding unit or in the order from the other injection molding unit to the one injection molding unit and conveys the preform integrated with the additional structure to the blow molding unit.

An apparatus for manufacturing a resin multi-chamber container according to another aspect of the present invention manufactures a resin multi-chamber container in which a first container and a second container having different characteristics are integrated. The apparatus for manufacturing a resin container includes: a first injection molding unit that injection-molds a first preform having a bottomed tubular shape and made of resin; a second injection molding unit that injection-molds a second preform having a bottomed tubular shape, made of resin, and having characteristics different from those of the first preform; and a blow molding unit that manufactures a multi-chamber container including the first container in which the first preform is blow-molded and the second container in which the second preform is blow-molded. The blow molding unit disposes the first preform and the second preform in the same mold in a state of having residual heat from injection molding, and blow-molds the first preform and the second preform simultaneously to integrate the first container and the second container in the mold.

### Advantageous Effects of Invention

According to one aspect of the present invention, it is possible to provide a manufacturing apparatus capable of molding the additional structure and the container body using different materials, and relatively easily manufacturing a container in which the additional structure is integrated with the container body or a resin multi-chamber container in which a plurality of containers having different characteristics are integrated.

### Brief Description of Drawings

Fig. 1 is a view illustrating a first example of a preform and a container according to a first embodiment.
Fig. 2 is a view illustrating a second example of the preform and the container according to the first embodiment.
Fig. 3 is a view illustrating a third example of the preform and the container of the first embodiment.
Fig. 4 is a diagram schematically illustrating a configuration of a blow molding apparatus according to the first embodiment.
Fig. 5 is a view schematically illustrating an example of a manufacturing step of the container of the first embodiment.
Fig. 6 is a flowchart illustrating steps of a method for manufacturing the container of the first embodiment.
Fig. 7 is a view illustrating a configuration example of a resin multi-chamber container of a second embodiment.
Fig. 8 is a view schematically illustrating an example of a manufacturing step of the multi-chamber container of the second embodiment.
Fig. 9 is a continuation of Fig. 8.

### Description of Embodiments

Hereinafter, embodiments of the present invention will be described with reference to the drawings.

In the embodiments, for easy understanding, structures and elements other than the main portion of the present invention will be described in a simplified or omitted manner. In the drawings, the same elements are denoted by the same reference numerals. Note that the shapes, dimensions, and the like of the respective elements illustrated in the drawings are schematically illustrated, and do not indicate actual shapes, dimensions, and the like.

### <<First Embodiment>>

### <Configuration Example of Preform>

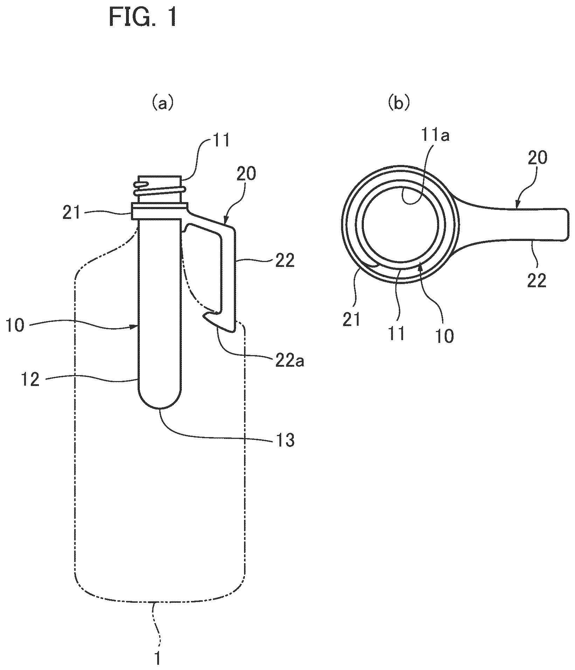

First, a configuration example of a preform 10 according to a first embodiment will be described with reference to Figs. 1 to 3. Here, each of the containers manufactured in the first embodiment is configured by integrating an additional structure with a container body 1. In Figs. 1(a), 2(a), and 3(a), the outline of the container body 1 formed by blow molding the preform 10 is indicated by two-dot chain lines.

Fig. 1 is a diagram illustrating a first example of a preform 10. The first example illustrates the preform 10 applied in the case of providing a handle 20 as an additional structure of the container body 1. Fig. 1(a) is a front view of the preform 10 of a first example, and Fig. 1(b) is a plan view of the preform 10 of the first example.

The entire shape of the preform 10 is a bottomed tubular shape in which one end side is opened and the other end side is closed. The preform 10 includes a body portion 12 formed in a cylindrical shape, a bottom portion 13 that closes the other end side of the body portion 12, and a neck portion 11 formed in an opening 11a on one end side of the body portion 12. In the second example and the third example to be described later, the shape of the preform 10 is the same, and thus redundant description is omitted.

In the preform 10 of the first example, a handle 20 is attached to the lower side of the neck portion 11. The handle 20 is injection-molded using a resin material different from a resin material of the preform 10, and has an annular attachment base portion 21 and a handle main body 22. The attachment base portion 21 is formed (below the neck) immediately below the neck portion 11 of the preform 10 and is formed to annularly surround the outer periphery of the preform 10.

The handle main body 22 is provided at a predetermined position in the circumferential direction of the preform 10, and is integrally formed with the attachment base portion 21 in a cantilevered state. The handle main body 22 has a shape that is curved outside the attachment base portion 21 and extends toward the bottom portion side of the preform 10, and is set to have a size that is easily gripped by a human hand. In addition, a distal end (an end portion opposite to the attachment base portion 21) of the handle main body 22 forms an engagement portion 22a that engages with the container body 1 during blow molding.

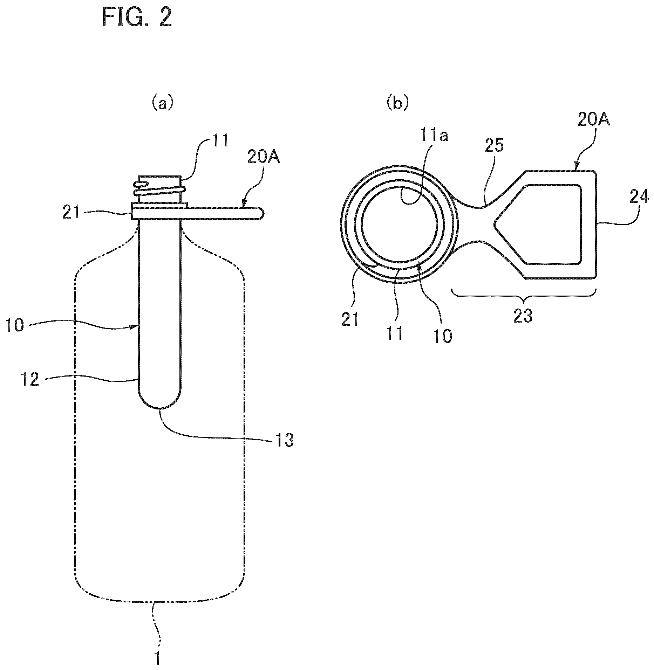

Fig. 2 is a view illustrating a second example of the preform 10. The second example illustrates the preform 10 applied in a case where a hanging tool 20A is provided as an additional structure of the container body 1. Fig. 2(a) is a front view of the preform 10 of the second example, and Fig. 2(b) is a plan view of the preform 10 of the second example.

In the preform 10 of the second example, the hanging tool 20A is attached to the lower side of the neck portion 11. The hanging tool 20A is injection-molded using a resin material different from the resin material of the preform 10, and includes an annular attachment base portion 21 and a flat plate shaped hanging tool main body 23. The configuration of the attachment base portion 21 is similar to that of the first example.

The hanging tool main body 23 is formed to protrude outward from the attachment base portion 21. The hanging tool main body 23 includes a grip portion 24 provided on a free end side opposite to the attachment base portion 21, and a connection portion 25 connecting the grip portion 24 and the attachment base portion 21. The grip portion 24 is a ring-shaped frame body, and is used, for example, when the container body 1 is transported through a gap with a human finger.

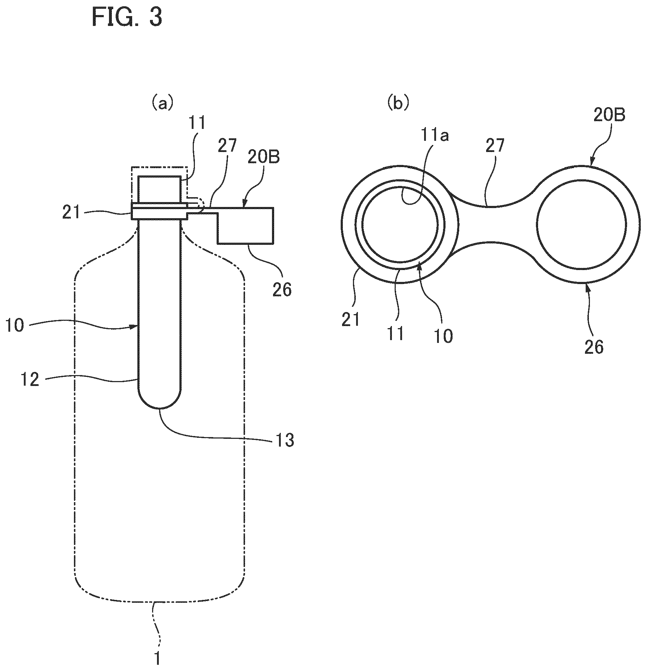

Fig. 3 is a diagram illustrating a third example of the preform 10. The third example illustrates the preform 10 applied in a case where a lid portion 20B is provided as an additional structure of the container body 1. Fig. 3(a) is a front view of the preform 10 of the third example, and Fig. 3(b) is a plan view of the preform 10 of the third example.

In the preform 10 of the third example, the lid portion 20B is attached to the lower side of the neck portion 11. The lid portion 20B is injection-molded using a resin material different from the resin material of the preform 10, and includes an annular attachment base portion 21, a lid main body 26, and a hinge portion 27. The configuration of the attachment base portion 21 is similar to that of the first example.

The lid main body 26 is a bottomed tubular cap having a dimension corresponding to the neck portion 11, and can close the opening 11a by covering the neck portion 11. The hinge portion 27 is provided between the attachment base portion 21 and the lid main body 26, and connects the lid main body 26 to the neck portion 11 so as to be openable and closable by elastic deformation.

### <Description of apparatus for Manufacturing Container>

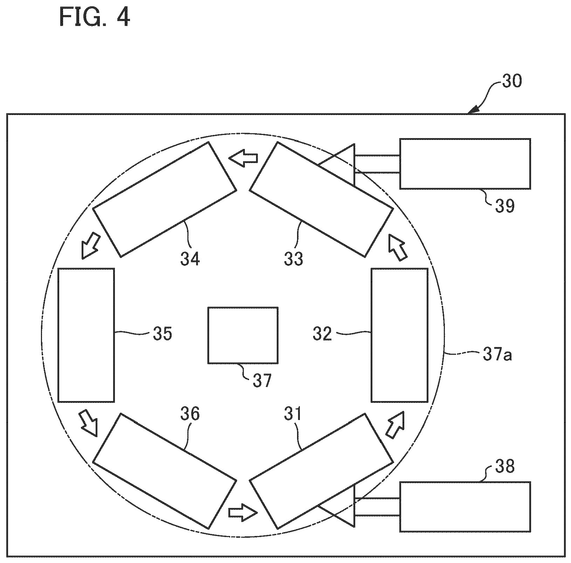

Fig. 4 is a diagram schematically illustrating a configuration of a blow molding apparatus 30 according to the first embodiment. The blow molding apparatus 30 according to the first embodiment is an example of a container manufacturing apparatus, and employs a hot parison method (also referred to as a one-stage method) in which a container is blow-molded by utilizing residual heat (internal heat quantity) from injection molding without cooling the preform 10 to room temperature.

In the following description, an example of manufacturing a container in which the preform 10 of the first example is injection-molded and the handle 20 is provided as an additional structure will be described. In the following description, as an example, a case where the preform 10 is injection-molded and then the additional structure is injection-molded will be described.

The blow molding apparatus 30 includes a first injection molding unit 31, a first temperature adjustment unit 32, a second injection molding unit 33, a second temperature adjustment unit 34, a blow molding unit 35, a taking-out unit 36, and a conveyance mechanism 37. The first injection molding unit 31, the first temperature adjustment unit 32, the second injection molding unit 33, the second temperature adjustment unit 34, the blow molding unit 35, and the taking-out unit 36 are disposed at positions rotated by a predetermined angle (for example, 60 degrees) about the conveyance mechanism 37.

### (Conveyance Mechanism 37)

The conveyance mechanism 37 includes a transfer plate 37a that moves so as to rotate about an axis in a direction perpendicular to the paper surface of Fig. 4. On the transfer plate 37a, one or more neck molds 37b (not illustrated in Fig. 4) for holding the preform or the neck portion 11 of the container are disposed at each predetermined angle. The transfer plate 37a and the neck mold 37b are examples of the conveyor.

The conveyance mechanism 37 rotates the transfer plate 37a to convey the preform 10 held by the neck mold 37b in the order of the first injection molding unit 31, the first temperature adjustment unit 32, the second injection molding unit 33, the second temperature adjustment unit 34, the blow molding unit 35, and the taking-out unit 36. The conveyance mechanism 37 can also move up and down the transfer plate 37a, and also performs operations related to mold closing and mold opening (releasing) in the first injection molding unit 31 and the second injection molding unit 33.

### (First Injection Molding Unit 31)

The first injection molding unit 31 includes an injection cavity mold 40 and an injection core mold 41, and manufactures the preform 10. The first injection molding unit 31 is an example of one injection molding unit. Moreover, as illustrated in Fig. 2, a first injection device 38 that supplies a first resin material that is a material of the preform 10 is connected to the first injection molding unit 31.

Here, the first resin material is a thermoplastic synthetic resin, and can be appropriately selected according to the specifications of the container body 1 to be manufactured. Specific examples of the material include PET (polyethylene terephthalate), PEN (polyethylene naphthalate), PCTA (polycyclohexanedimethylene terephthalate), Tritan (Tritan (registered trademark): copolyester manufactured by Eastman Chemical Co., Ltd.), PP (polypropylene), PE (polyethylene), PC (polycarbonate), PES (polyethersulfone), PPSU (polyphenylsulfone), PS (polystyrene), COP/COC (cyclic olefin polymer), PMMA (polymethyl methacrylate: acrylic), PLA (polylactic acid), and the like. An additive such as a coloring material may be added to the first resin material.

The injection cavity mold 40 is a mold that defines the outer peripheral side shapes of the body portion 12 and the bottom portion 13 of the preform 10. A resin supply nozzle 43 for introducing the first resin material from the first injection device 38 is connected to the lower side of the injection cavity mold 40. The injection core mold 41 is a mold to be inserted into the injection cavity mold 40 and the neck mold 37b, and defines the inner peripheral side shape of the preform 10. In addition, the neck mold 37b functions as a mold that defines the outer peripheral shape of the neck portion 11 of the preform 10.

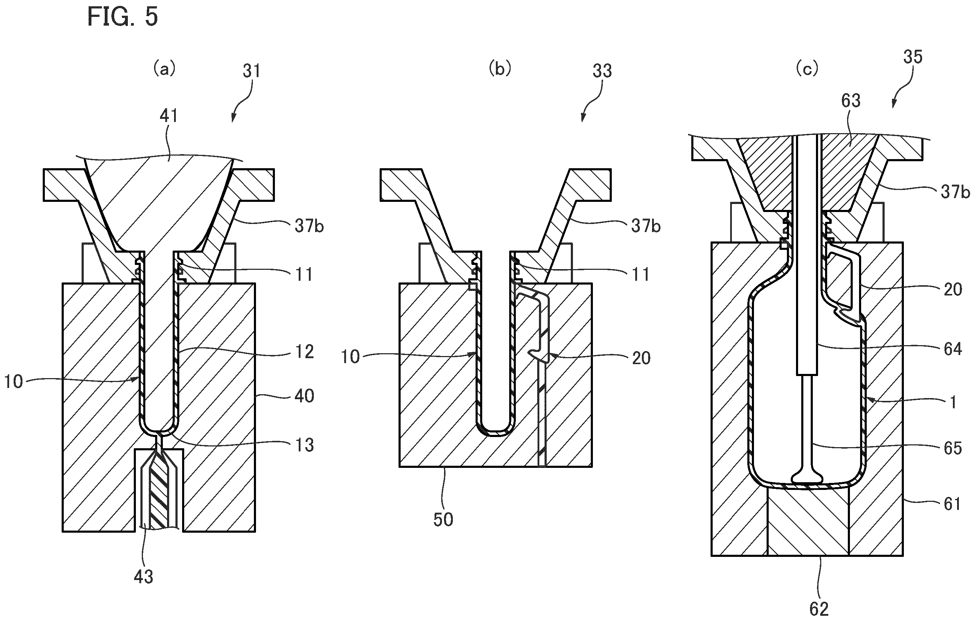

Fig. 5(a) illustrates an injection molding step in the first injection molding unit 31. In the first injection molding unit 31, a mold space of the preform 10 is formed by closing the injection cavity mold 40, the injection core mold 41, and the neck mold 37b. Then, by injecting the first resin material from the first injection device 38 into the mold space via the resin supply nozzle 43, the preform 10 is manufactured in the first injection molding unit 31.

In addition, even when the mold of the first injection molding unit 31 is opened, the neck mold 37b of the conveyance mechanism 37 is not released and the preform 10 is held and conveyed as it is. The number (that is, the number of containers that can be simultaneously molded by the blow molding apparatus 30) of the preforms 10 simultaneously molded by the first injection molding unit 31 can be appropriately set.

### (First Temperature Adjustment Unit 32)

The first temperature adjustment unit 32 includes a mold unit (not illustrated). The first temperature adjustment unit 32 adjusts the temperature distribution of the preform 10 to a predetermined state by equalizing temperature or removing uneven temperature of the preform 10 before being conveyed to the second injection molding unit 33. The first temperature adjustment unit 32 may have a function of cooling the preform 10 in a high temperature state after injection molding.

The mold unit of the first temperature adjustment unit 32 may include, for example, a heating pot that accommodates the preform 10 and heats the preform 10 from the surroundings in a non-contact manner, or may include a temperature adjustment mold that blows compressed air into the preform 10 to perform cooling and temperature adjustment. For example, the above-described temperature adjustment mold includes a cavity mold (temperature control pot) capable of accommodating the preform 10, and an air introduction member that comes into contact with the neck portion 11 and introduces compressed air into the preform 10.

### (Second Injection Molding Unit 33)

The second injection molding unit 33 includes an injection mold 50 for injection-molding the handle 20. The second injection molding unit 33 is an example of the other injection molding unit. The injection mold 50 is, for example, a split mold divided by a division plane along a longitudinal direction of the preform 10 and having a mold space corresponding to the handle 20. When the additional structure to be injection-molded is the above-mentioned hanging tool 20A or lid portion 20B, the division plane of the injection mold 50 is appropriately changed.

As illustrated in Fig. 2, a second injection device 39 that supplies a second resin material, which is a material of the handle 20, is connected to the second injection molding unit 33, and the second resin material is injected into the mold space of the injection mold 50. The second resin material is a thermoplastic synthetic resin, and specific types of materials are the same as those described for the first resin material. The second resin material can be appropriately selected according to the specifications of the handle 20 to be manufactured.

Fig. 5(b) illustrates an injection molding step in the second injection molding unit 33. In the second injection molding unit 33, the injection molding of the second resin material is performed in a state where the preform 10 is accommodated in the injection mold 50. Thereby, the handle 20 is formed below the neck of the preform 10. Even when the mold of the second injection molding unit 33 is opened, the neck mold 37b of the conveyance mechanism 37 is not released and the preform 10 is held and conveyed. In addition, since the handle 20 is held on the preform 10 by welding, engagement, or the like during injection molding, the handle is conveyed together with the preform 10.

### (Second Temperature Adjustment Unit 34)

The second temperature adjustment unit 34 includes a mold unit (not illustrated). The second temperature adjustment unit 34 has a function of cooling the handle 20 conveyed from the second injection molding unit 33 to a predetermined temperature. This makes it possible to suppress distortion of the handle 20 due to heat shrinkage after the injection molding. The second temperature adjustment unit 34 also performs temperature adjustment for adjusting the temperature of the preform 10 to a temperature suitable for final blowing (for example, about 90°C to 105°C).

Note that the mold unit of the second temperature adjustment unit 34 may have either a configuration including a heating pot or a configuration including a temperature adjustment mold for blowing compressed air into the preform 10 as long as the handle 20 can be locally cooled.

### (Blow Molding Unit 35)

The blow molding unit 35 blow-molds the preform 10 having the handle 20 conveyed from the second temperature adjustment unit 34 to manufacture the container with the handle 20. The blow molding unit 35 includes a blow cavity mold 61, a bottom mold 62, a fitting core (blow core) 63, an air introduction/discharge member 64, and a stretching rod 65.

The blow cavity mold 61 is a pair of split molds that defines a body shape of the container body 1. The preform 10 is accommodated inside the blow cavity mold 61 in a state where the handle 20 is positioned. The bottom mold 62 is a mold that defines the bottom shape of the container body 1.

When the additional structure provided in the container is the hanging tool 20A or the lid portion 20B, an accommodating portion (not illustrated) that accommodates the hanging tool 20A or the lid portion 20B is provided outside the mold space in the blow cavity mold 61. By accommodating the hanging tool 20A and the lid portion 20B in the accommodating portion, the blow molding of the container body 1 can be performed without winding the hanging tool 20A and the lid portion 20B.

The fitting core 63 is a mold to be inserted into the neck mold 37b, and is in close contact with the inner periphery or the upper end surface of the neck portion 11 of each preform 10 in a state of being inserted into the neck mold 37b, and maintains airtightness with the preform 10 during blow molding. In the fitting core 63, an opening portion is formed at the position of the opening 11a of the preform 10, and the air introduction/discharge member 64 and the stretching rod 65 are inserted into the opening portion.

The air introduction/discharge member 64 is a tubular member, and the stretching rod 65 that is capable of moving forward and backward in the axial direction is concentrically disposed inside the air introduction/discharge member. A gap between the fitting core 63 and the air introduction/discharge member 64 and the inside of the air introduction/discharge member 64 constitute a supply path and an exhaust path of compressed air (blow air).

Fig. 5(c) illustrates a blow molding step in the blow molding unit 35. The blow molding unit 35 blows compressed air into the preform 10 while stretching the preform 10 to blow-mold the container body 1. When the container body 1 is shaped, a distal end portion of the handle 20 is engaged with the container body 1, whereby the handle 20 is integrated with the container body 1.

### (Taking-Out Unit 36)

The taking-out unit 36 is configured to release the neck portion 11 of the container with a handle manufactured by the blow molding unit 35 from the neck mold 37b and take out the container to the outside of the blow molding apparatus 30.

### <Description of Method for Manufacturing Container>

Next, a method for manufacturing the container by the blow molding apparatus 30 of the first embodiment will be described. Fig. 5 is a flowchart illustrating steps of the method for manufacturing the container.

### (Step S101: First Injection Molding Step)

First, as illustrated in Fig. 5(a), in the first injection molding unit 31, the first resin material is injected from the first injection device 38 into the mold space formed by the injection cavity mold 40, the injection core mold 41, and the neck mold 37b, and the preform 10 is manufactured.

Thereafter, when the mold of the first injection molding unit 31 is opened, the transfer plate 37a of the conveyance mechanism 37 moves so as to rotate by a predetermined angle, and the preform 10 held by the neck mold 37b is conveyed to the first temperature adjustment unit 32 in a state of containing residual heat from injection molding.

### (Step S102: First Temperature Adjustment Step)

Next, the preform 10 is accommodated in the mold unit of the first temperature adjustment unit 32, and the temperature distribution is adjusted (equalization of temperature or removal of uneven temperature). Thereafter, the transfer plate 37a moves so as to rotate by a predetermined angle, and the neck mold 37b is conveyed to the second injection molding unit 33 in a state of holding the preform 10.

### (Step S103: Second Injection Molding Step)

Subsequently, the neck mold 37b is lowered with respect to the injection mold 50 of the second injection molding unit 33, and the injection mold 50 is closed in a state where the preform 10 is accommodated in the injection mold 50. Then, as illustrated in Fig. 5(b), the second resin material is injected from the second injection device 39 into the mold space of the injection mold 50 to form the handle 20.

Thereafter, when the mold of the second injection molding unit 33 is opened, the transfer plate 37a moves so as to rotate by a predetermined angle, and the preform 10 held by the neck mold 37b and the handle 20 welded to the preform 10 are conveyed to the second temperature adjustment unit 34.

### (Step S104: Second Temperature Adjustment Step)

Subsequently, the preform 10 and the handle 20 are accommodated in the second temperature adjustment unit 34, and cooling of the handle 20 and temperature adjustment for bringing the preform 10 close to a temperature suitable for final blow are simultaneously performed. Thereafter, the transfer plate 37a moves so as to rotate by a predetermined angle, and the preform 10 and the handle 20 after the temperature adjustment are conveyed to the blow molding unit 35.

### (Step S105: Blow Molding Step)

Subsequently, the blow-molding of the container is performed in the blow molding unit 35.

First, the blow cavity mold 61 is closed, and the preform 10 and the handle 20 are accommodated in the mold space. Then, by lowering the fitting core 63, the air introduction/discharge member 64 and the stretching rod 65 are inserted into the preform 10. Next, the stretching rod 65 is lowered to hold the bottom portion 13 of the preform 10 from the inner surface, and stretching in the longitudinal axis is performed as necessary. Thereafter, blow air is supplied from the air introduction/discharge member 64 to stretch the preform 10 in the lateral direction.

As illustrated in Fig. 5(c), the preform 10 bulges so as to be in close contact with the blow cavity mold 61 and the bottom mold 62 by the supply of the blow air, and is shaped into the container body 1. At this time, the distal end portion of the handle 20 is engaged with the container body 1, whereby the handle 20 is integrated with the container body 1.

### (Step S106: Container Taking-Out Step)

When the blow molding is completed, the blow cavity mold 61 is opened. As a result, the container is movable from the blow molding unit 35.

Subsequently, the transfer plate 37a moves so as to rotate by a predetermined angle, and the container is conveyed to the taking-out unit 36. In the taking-out unit 36, the neck portion 11 of the container is opened from the neck mold 37b, and the container is taken out to the outside of the blow molding apparatus 30.

Thus, one cycle in the method for manufacturing the container ends. Thereafter, by moving the transfer plate 37a so as to rotate by a predetermined angle, the respective steps of S101 to S106 described above are repeated. During the operation of the blow molding apparatus 30, six sets of containers having a time difference of one step are manufactured in parallel.

Further, due to the structure of the blow molding apparatus 30, the respective times of the first injection molding step, the first temperature adjustment step, the second injection molding step, the second temperature adjustment step, the blow molding step, and the container taking-out step are the same. Similarly, the conveyance time between the steps is the same.

Hereinafter, functions and effects of the first embodiment will be described.

In the blow molding apparatus 30 of the first embodiment, the preform 10 is injection-molded by the first injection molding unit 31, and the handle 20, which is an additional structure, is injection-molded integrally with the preform 10 by the second injection molding unit 33 different from the first injection molding unit 31. Then, the blow molding unit 35 blow-molds the preform 10 to shape the container body 1, thereby manufacturing a container in which the additional structure (handle 20) is integrated with the container body 1.

In the first embodiment, the steps of injection molding of the preform 10, injection molding of the additional structure, and blow molding of the container body 1 are continuously performed, and a container in which the additional structure is integrated with the container body can be easily manufactured. In the first embodiment, since the preform 10 and the additional structure are separately manufactured by different injection molding units, the container body 1 and the additional structure shaped from the preform 10 can be molded using different materials.

<Modification Example of First Embodiment>

In the first embodiment described above, an example has been described in which the preform 10 is first injection-molded by the first injection molding unit 31, and then the additional structure is injection-molded by the second injection molding unit 33. However, in the first embodiment, the preform 10 may be injection-molded so that the additional structure is first injection-molded by the first injection molding unit 31 and then integrated with the additional structure by the second injection molding unit 33. In this case, the first injection molding unit 31 functions as the other injection molding unit, and the second injection molding unit 33 functions as one injection molding unit.

When the additional structure is first injection-molded, for example, the attachment base portion of the additional structure is held and conveyed by the neck mold 37b, and the resin material is injected into the attachment base portion of the additional structure in the injection molding unit at the subsequent stage to manufacture the preform 10.

In addition, in the first embodiment described above, an example in which an additional structure is formed under the neck of the preform 10 has been described. However, the formation position of the additional structure is not limited to the above, and for example, the additional structure may be formed so as to be directly connected to the neck portion 11. In addition, the additional structure is not limited to the handle, the hanging tool, or the lid connected to the container body, and is a concept widely including a resin container and a structure connected thereto. For example, the additional structure may be a structure such as a label tag (tag) or a structure such as a band connecting a resin container and a resin container.

### <<Second Embodiment>>

### <Configuration Example of Multi-Chamber Container>

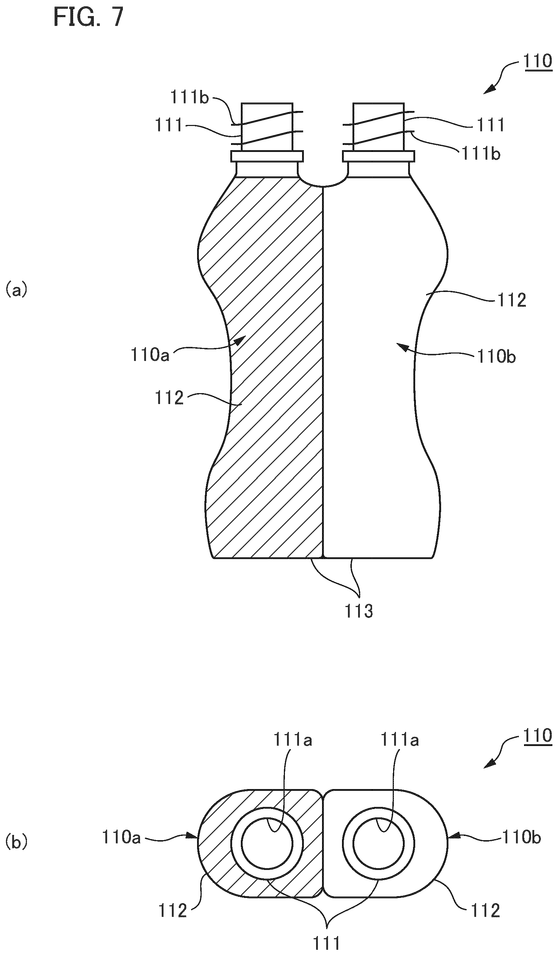

First, a configuration example of a resin multi-chamber container of a second embodiment will be described with reference to Fig. 7. Fig. 7(a) is a front view of the resin multi-chamber container, and Fig. 7(b) is a plan view of the resin multi-chamber container.

A multi-chamber container 110 is formed by integrating a first container 110a and a second container 110b each made of thermoplastic resin. Each of the first container 110a and the second container 110b includes a neck portion 111 having a mouth portion 111a at an upper end, a tubular body portion 112 continuous from the neck portion 111, and a bottom portion 113 continuous from the body portion 112. Each neck portion 111 is formed with threads 111b for cap removal. The first container 110a and the second container 110b are configured as independent containers, and can store contents (for example, a liquid such as a cosmetic, a drug, a beverage, or a seasoning) separately.

The first container 110a and the second container 110b illustrated in Fig. 7 are formed in substantially the same shape as an example, and are integrated as the multi-chamber container 110 by welding the surfaces of the body portions 12 facing each other over the entire surface. The first container 110a and the second container 110b of the multi-chamber container 110 are integrated in a state where the neck portions 111 are arranged in the same direction.

In multi-chamber container 110 illustrated in Fig. 7, the first container 110a and the second container 110b are made of different materials. As an example, the first container 110a and the second container 110b may be formed of different resin materials, or may be formed of the same type of resin materials having different compositions of colorants. Hereinafter, the resin material forming the first container 110a is also referred to as a first resin material, and the resin material forming the second container 110b is also referred to as a second resin material.

As described above, by forming the first container 110a and the second container 110b of the multi-chamber container 110 with different materials, for example, the appearance such as color can be changed between the first container 110a and the second container 110b, and the designability of the multi-chamber container 110 and the distinguishability of the first container 110a and the second container 110b can be improved. In addition, by forming the first container 110a and the second container 110b of the multi-chamber container 110 with different materials, the physical properties of the first container 110a and the second container 110b can be changed according to the specifications of the stored contents, and the function of the multi-chamber container 110 can be improved.

Further, in Fig. 7, the shapes of the two containers are substantially the same, and the multi-chamber container 110 in which colors, materials, and the like are different as characteristics of the first container 110a and the second container 110b is illustrated. However, for example, as one of characteristics of the first container 110a and the second container 110b, a neck shape, a body shape, and the like of the two containers may be different. When the first container 110a and the second container 110b are different from each other in the neck shape, the body shape, and the like, the first resin material and the second resin material may be the same.

### <Description of Apparatus for Manufacturing Multi-Chamber Container>

A basic configuration of a blow molding apparatus applied to the manufacturing of the resin multi-chamber container in the second embodiment is similar to the configuration of the blow molding apparatus 30 of the first embodiment illustrated in Fig. 4, and includes a first injection molding unit 31, a first temperature adjustment unit 32, a second injection molding unit 33, a second temperature adjustment unit 34, a blow molding unit 35, a taking-out unit 36, and a conveyance mechanism 37. In the following description, in the blow molding apparatus of the second embodiment, portions different from those of the first embodiment will be described, and redundant description of portions common to the first embodiment will be appropriately omitted.

### (Conveyance Mechanism 37)

In the conveyance mechanism 37 of the second embodiment, one or more neck molds 137b for holding of the preform or the neck portion 111 of the container are arranged on a transfer plate 37a at predetermined angles. The transfer plate 37a and the neck mold 137b are examples of the conveyor.

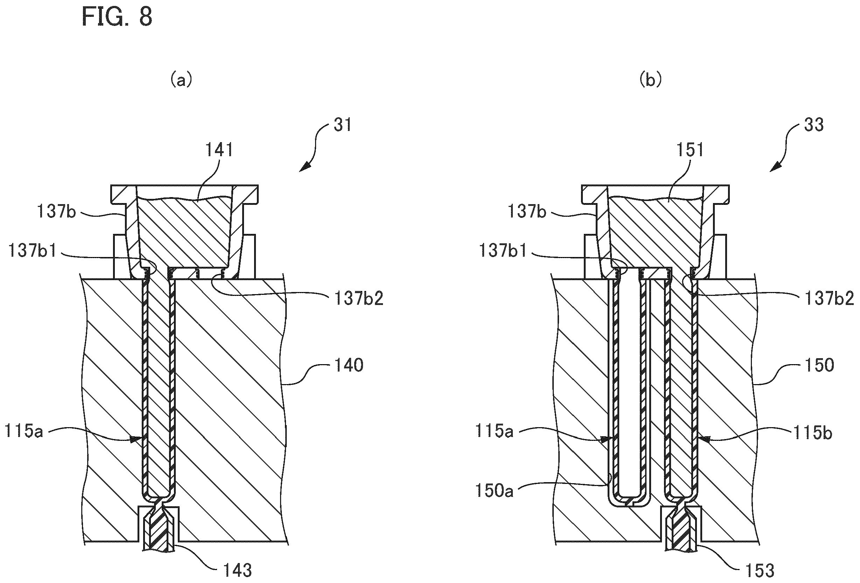

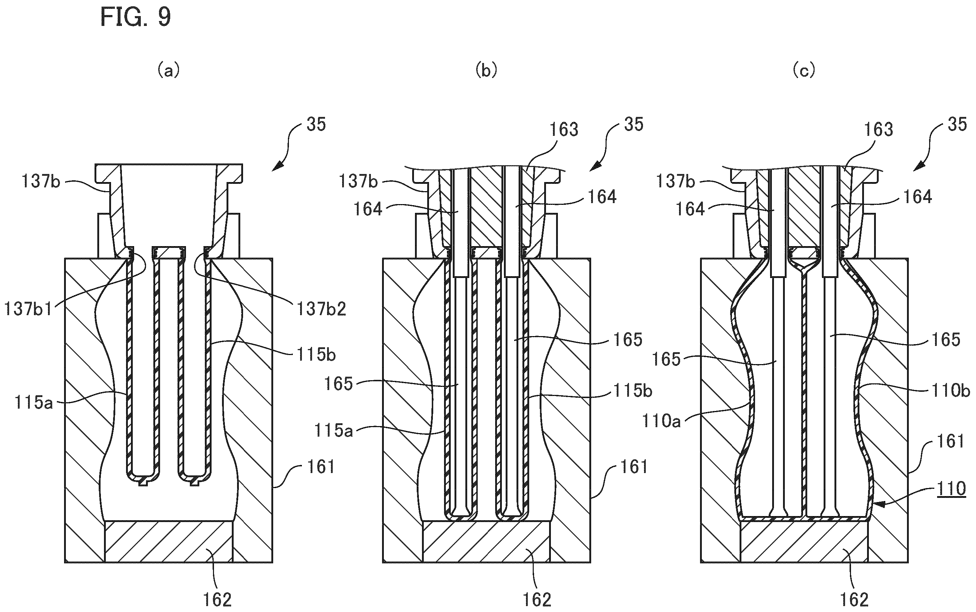

As illustrated in Figs. 8 and 9, for example, the neck mold 137b includes a first holding unit 137b1 that holds the neck portion 111 of the first container 110a and a second holding unit 137b2 that holds the neck portion 111 of the second container 110b, and each of the two neck portions 111 of the multi-chamber container 110 can be held by one neck mold 137b. Note that the configuration of the neck mold 137b is not limited to the above, and a neck mold for holding the neck portion 111 of the first container 110a and a neck mold for holding the neck portion 111 of the second container 110b may be independently provided, and each neck portion 111 of the multi-chamber container 110 may be held using two neck molds.

The conveyance mechanism 137 rotates the transfer plate 37a to convey the preforms 115a and 115b or the multi-chamber container 110 held by the neck mold 137b in the order of the first injection molding unit 31, the first temperature adjustment unit 32, the second injection molding unit 33, the second temperature adjustment unit 34, the blow molding unit 35, and the taking-out unit 36. The conveyance mechanism 37 can also move up and down the transfer plate 37a, and also performs operations related to mold closing and mold opening (releasing) in the first injection molding unit 31 and the second injection molding unit 33.

### (First Injection Molding Unit 31)

The first injection molding unit 31 includes an injection cavity mold 140 and an injection core mold 141, and manufactures a first preform 115a corresponding to the first container 110a. A first injection device 38 that supplies the first resin material is connected to the first injection molding unit 31. Here, the first resin material is a thermoplastic synthetic resin, and can be appropriately selected according to the specification of the first container 110a. The type of the first resin material is the same as that of the first embodiment.

The injection cavity mold 140 is a mold that defines the outer peripheral side shapes of the body portion and the bottom portion of the first preform 115a. A resin supply nozzle 143 for introducing the first resin material from the first injection device 38 is connected to the lower side of the injection cavity mold 140. The injection core mold 141 is a mold to be inserted into the injection cavity mold 140 and the first holding unit 137b1 of the neck mold 137b, and defines the inner peripheral side shape of the first preform 15a. In addition, the first holding unit 137b1 of the neck mold 137b functions as a mold that defines the outer peripheral shape of the neck portion 111 of the first preform 15a.

Fig. 8(a) illustrates an injection molding step in the first injection molding unit 31. In the first injection molding unit 31, a mold space of the first preform 115a is formed by closing the injection cavity mold 140, the injection core mold 141, and the neck mold 137b. Then, by injecting the first resin material from the first injection device 38 into the mold space via the resin supply nozzle 143, the first preform 115a is manufactured in the first injection molding unit 31.

In addition, even when the mold of the first injection molding unit 31 is opened, the neck mold 137b of the conveyance mechanism 37 is not released, and the first preform 115a is held and conveyed as it is. The number (that is, the number of multi-chamber containers 110 that can be simultaneously molded by the blow molding apparatus 30) of the first preforms 115a simultaneously molded by the first injection molding unit 31 can be appropriately set.

### (First Temperature Adjustment Unit 32)

The first temperature adjustment unit 32 includes a mold unit (not illustrated). The first temperature adjustment unit 32 adjusts the temperature distribution of the first preform 115a to a predetermined state by equalizing temperature or removing uneven temperature of the first preform 115a before being conveyed to the second injection molding unit 33. The first temperature adjustment unit 32 may have a function of cooling the first preform 115a in a high temperature state after injection molding.

The mold unit of the first temperature adjustment unit 32 may include, for example, a heating pot that accommodates the first preform 115a and heats the first preform 115a from the surroundings in a non-contact manner, or may include a temperature adjustment mold that blows compressed air into the first preform 115a to perform cooling and temperature adjustment. For example, the above-described temperature adjustment mold includes a cavity mold (temperature control pot) capable of accommodating the first preform 115a, and an air introduction member that comes into contact with the neck portion 111 and introduces compressed air into the first preform 115a.

### (Second Injection Molding Unit 33)

The second injection molding unit 33 includes an injection cavity mold 150 and an injection core mold 151, and manufactures a second preform 115b corresponding to the second container 110b. A second injection device 39 that supplies a second resin material is connected to the second injection molding unit 33. The second resin material is a thermoplastic synthetic resin, and specific types of materials are the same as those described for the first resin material. The second resin material may be a resin material different from the first resin material as described above, and may be, for example, the same type of resin material in which the composition such as the amount and type of the coloring material is changed from that of the first resin material.

The injection cavity mold 150 is a mold that defines the outer peripheral side shapes of the body portion and the bottom portion of the second preform 115b. A resin supply nozzle 153 for introducing the second resin material from the second injection device 39 is connected to the lower side of the injection cavity mold 150. The injection core mold 151 is a mold inserted into the injection cavity mold 150 and the second holding unit 137b2 of the neck mold 137b, and defines the inner peripheral side shape of the second preform 115b. In addition, the second holding unit 137b2 of the neck mold 137b functions as a mold that defines the outer peripheral shape of the neck portion 111 of the second preform 115b.

In addition, in the injection cavity mold 150, at the corresponding position of the first holding unit 137b1, for example, a clearance hole 150a, which is an accommodation space for accommodating the first preform 115a, is formed. Therefore, when the mold is closed, the first preform 115a is inserted into the clearance hole 150a, and interference between the first preform 115a and the injection cavity mold 150 can be avoided. Further, the injection core mold 151 may be configured not to be inserted into the first holding unit 137b1 and the first preform 115a, for example.

Fig. 8(b) illustrates an injection molding step in the second injection molding unit 33. In the second injection molding unit 33, a mold space of the second preform 115b is formed by closing the injection cavity mold 150, the injection core mold 151, and the neck mold 137b. Then, by injecting the second resin material from the second injection device 39 into the mold space via the resin supply nozzle 153, the second preform 115b is manufactured in the second injection molding unit 33. Even when the mold of the second injection molding unit 33 is opened, the neck mold 137b of the conveyance mechanism 37 is not released, and the first preform 115a and the second preform 115b are held and conveyed.

### (Second Temperature Adjustment Unit 34)

The second temperature adjustment unit 34 includes a mold unit (not illustrated). Before being conveyed to the blow molding unit 35, the second temperature adjustment unit 34 performs equalization of temperature and removal of uneven temperature of the first preform 115a and the second preform 115b manufactured by the second injection molding unit 33, and simultaneously adjusts the temperature distributions of the first preform 115a and the second preform 115b to a predetermined state. As a result, the temperatures of the first preform 115a and the second preform 115b are adjusted to a temperature (for example, about 90°C to 105°C) suitable for final blowing at the time of conveyance from the second temperature adjustment unit 34.

In addition, the mold unit of the second temperature adjustment unit 34 is different from the mold unit of the first temperature adjustment unit 32 in that both the first preform 115a and the second preform 115b can be accommodated, but since the other points are the same, redundant description is omitted.

### (Blow Molding Unit 35)

The blow molding unit 35 blow-molds the first preform 115a and the second preform 115b temperature-adjusted by the second temperature adjustment unit 34 to manufacture the multi-chamber container 110. The blow molding unit 35 includes a blow cavity mold 161, a bottom mold 162, a fitting core (blow core) 163, two sets of air introduction/discharge members 164, and a stretching rod 165.

The blow cavity mold 161 is a pair of split molds that defines a body shape of the multi-chamber container 110. The first preform 115a and the second preform 115b are accommodated inside the blow cavity mold 161. The bottom mold 162 is a mold that defines a bottom shape of the multi-chamber container 110.

The fitting core 163 is a mold inserted into the neck mold 137b, and is in close contact with the inner periphery or the upper end surface of the neck portion 111 of each of the preforms 115a and 115b in a state of being inserted into the neck mold 137b, and maintains airtightness with the preforms 115a and 115b during blow molding. In the fitting core 163, one set of the air introduction/discharge member 164 and one set of the stretching rod 165 are disposed at the corresponding position of the first preform 115a and the corresponding position of the second preform 115b, respectively. Since the configurations of the two sets of air introduction/discharge members 164 and the stretching rod 165 are common, the configuration on the first preform 15a side will be described, and the other description will be omitted.

The air introduction/discharge member 164 and the stretching rod 165 are inserted through an opening portion formed in the fitting core 163. The air introduction/discharge member 164 is a tubular member, and the stretching rod 165 that is capable of moving forward and backward in the axial direction is concentrically disposed inside the tubular member. A gap between the fitting core 163 and the air introduction/discharge member 164 and the inside of the air introduction/discharge member 164 constitute a supply path and an exhaust path of compressed air (blow air).

Figs. 9(a) to 9(c) illustrate a blow molding step in the blow molding unit 35. The blow molding unit 35 blow-molds the container by blowing compressed air into each preform while stretching the first preform 115a and the second preform 115b. The first container 110a and the second container 110b are simultaneously blow-molded, and the multi-chamber container 10 is manufactured by welding the first container 110a and the second container 110b at the time of shaping the container.

### (Taking-Out Unit 36)

The taking-out unit 36 is configured to release the neck portion 111 of the multi-chamber container 110 manufactured by the blow molding unit 35 from the neck mold 137b and take out the multi-chamber container 110 to the outside of the blow molding apparatus 30.

### <Description of Method for Manufacturing Container>

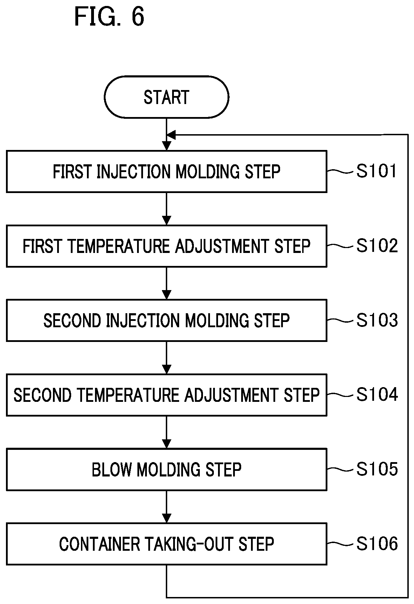

Next, a method for manufacturing the multi-chamber container 110 by the blow molding apparatus 30 of the second embodiment will be described. The steps of the manufacturing method of the second embodiment include a first injection molding step (S101), a first temperature adjustment step (S102), a second injection molding step (S103), a second temperature adjustment step (S104), a blow molding step (S105), and a container taking-out step (S106), as in Fig. **6****.**

### (Step S101: First Injection Molding Step)

First, as illustrated in Fig. 8(a), in the first injection molding unit 31, the first resin material is injected from the first injection device 38 into the mold space formed by the injection cavity mold 140, the injection core mold 141, and the first holding unit 137b1 of the neck mold 137b, and the first preform 115a is manufactured.

Thereafter, when the mold of the first injection molding unit 31 is opened, the transfer plate 37a of the conveyance mechanism 37 moves so as to rotate by a predetermined angle, and the first preform 115a held by the first holding unit 137b1 of the neck mold 137b is conveyed to the first temperature adjustment unit 32 in a state of containing residual heat from injection molding.

### (Step S102: First Temperature Adjustment Step)

Next, the first preform 115a is accommodated in the mold unit of the first temperature adjustment unit 32, and the temperature distribution is adjusted (equalization of temperature or removal of uneven temperature). Thereafter, the transfer plate 37a moves so as to rotate by a predetermined angle, and the neck mold 137b is conveyed to the second injection molding unit 33 in a state where the first preform 115a is held by the first holding unit 137b1.

### (Step S103: Second Injection Molding Step)

Subsequently, the neck mold 137b is lowered with respect to the injection cavity 150 of the second injection molding unit 33, the first preform 115a is accommodated in the clearance hole 150a of the injection cavity mold 150, and the injection cavity mold 150 and the neck mold 137b are closed. Thereafter, the injection core mold 151 is inserted into the second holding unit 137b2 of the neck mold 137b. Then, the second resin material is injected from the second injection device 39 into the mold space formed by the injection cavity mold 150, the injection core mold 151, and the second holding unit 137b2 of the neck mold 137b, and the second preform 115b is manufactured.

Thereafter, when the mold of the second injection molding unit 33 is opened, the transfer plate 37a moves so as to rotate by a predetermined angle, and both the first preform 115a held by the first holding unit 137b1 of the neck mold 137b and the second preform 115b held by the second holding unit 137b2 are conveyed to the second temperature adjustment unit 34 in a state of containing residual heat from injection molding.

### (Step S104: Second Temperature Adjustment Step)

Subsequently, the first preform 115a and the second preform 115b are respectively accommodated in the second temperature adjustment unit 34, and temperature adjustment for bringing the temperatures of the first preform 115a and the second preform 115b close to temperatures suitable for final blowing is simultaneously performed. Thereafter, the transfer plate 37a moves so as to rotate by a predetermined angle, and the first preform 115a and the second preform 115b after the temperature adjustment are conveyed to the blow molding unit 35.

### (Step S105: Blow Molding Step)

Subsequently, in the blow molding unit 35, the multi-chamber container 110 is blow-molded.

First, the blow cavity mold 161 is closed, and the first preform 115a and the second preform 115b are accommodated in the mold space (Fig. 9(a)). Then, by lowering the fitting core 163, the air introduction/discharge member 164 and the stretching rod 165 are inserted into the first preform 115a and the second preform 115b, respectively.

Next, as illustrated in Fig. 9(b), the stretching rod 165 is lowered to hold the bottom portions of the preforms 115a and 115b from the inner surface, and stretching in longitudinal axis is performed as necessary. Thereafter, blow air is supplied from the air introduction/discharge member 164 to stretch the preforms 115a and 115b in the lateral direction.

By the supply of the blow air, the first preform 115a and the second preform 115b bulge so as to be in close contact with the blow cavity mold 161 and the bottom mold 162, respectively, and are shaped into the first container 110a and the second container 110b. Then, in the first container 110a and the second container 110b, the surfaces of the body portions 112 facing each other are entirely welded and integrated to manufacture the multi-chamber container 110 (Fig. 9(c)).

### (Step S106: Container Taking-Out Step)

When the blow molding is completed, the blow cavity mold 161 is opened. As a result, the multi-chamber container 110 is movable from the blow molding unit 35.

Subsequently, the transfer plate 37a moves so as to rotate by a predetermined angle, and the multi-chamber container 110 is conveyed to the taking-out unit 36. In the taking-out unit 36, the two neck portions 111 of the multi-chamber container 110 are released from the neck mold 137b, and the multi-chamber container 110 is taken out to the outside of the blow molding apparatus 30.

Thus, one cycle in the method for manufacturing the multi-chamber container 110 ends.

Hereinafter, operational effects of the second embodiment will be described.

In the blow molding apparatus 30 of the second embodiment, the first preform 115a is injection-molded by the first injection molding unit 31, and the second preform 115b is sequentially injection-molded by the second injection molding unit 33 different from the first injection molding unit 31. Then, the first preform 115a and the second preform 115b are simultaneously blow-molded by the blow molding unit 35 to manufacture the multi-chamber container 10 in which the first container 110a shaped from the first preform 115a and the second container 110b shaped from the second preform 115b are integrated.

In the second embodiment, since the first preform 115a and the second preform 115b are separately manufactured by different injection molding units, characteristics such as color, material, and shape can be easily changed between the two preforms 115a and 115b. Therefore, in the blow molding apparatus 30 of the present embodiment, the multi-chamber container 110 in which the first container 110a and the second container 110b having different characteristics such as color, material, and shape are integrated can be easily manufactured.

In addition, in the second embodiment, a hot parison method is adopted in which the first container 110a and the second container 110b are blow-molded in a state of having residual heat from injection molding. Therefore, steps from injection molding of the preform to blow molding of the multi-chamber container 110 are continuously performed, and the multi-chamber container 110 can be manufactured with a relatively short manufacturing cycle. Further, in the second embodiment, since the first container 110a and the second container 110b are welded at the time of blow molding to form the multi-chamber container, it is possible to simplify manufacturing equipment and a manufacturing step as compared with a case or the like in which the first container and the second container are separately manufactured and then bonded and assembled in a subsequent step. Therefore, the manufacturing cost of the multi-chamber container 110 in which the first container 110a and the second container 110b having different characteristics are integrated can be greatly suppressed.

The present invention is not limited to the above embodiments, and various improvements and design changes may be made without departing from the gist of the present invention.

For example, in the blow molding apparatus 30 of the above embodiment, the first temperature adjustment unit 32 between the first injection molding unit 31 and the second injection molding unit 33 may be omitted, and the temperature adjustment may be performed only by the second temperature adjustment unit 34. In the blow molding apparatus 30 having the above configuration, the first injection molding unit 31, the second injection molding unit 33, the temperature adjustment unit (34), the blow molding unit 35, and the taking-out unit 36 are disposed at positions rotated by 72 degrees about the conveyance mechanism 37.

In addition, the embodiments disclosed herein are to be considered in all respects as illustrative and not restrictive. The scope of the present invention is indicated not by the above description but by the claims, and it is intended that meanings equivalent to the claims and all modifications within the scope are included.

### Reference Signs List

- 1: container body
- 10: preform
- 11: neck portion
- 12: body portion
- 13: bottom portion
- 20: handle
- 20A: hanging tool
- 20B: lid portion
- 21: attachment base portion
- 30: blow molding apparatus
- 31: first injection molding unit
- 32: first temperature adjustment unit
- 33: second injection molding unit
- 34: second temperature adjustment unit
- 35: blow molding unit
- 36: taking-out unit
- 37: conveyance mechanism
- 37a: transfer plate
- 37b: neck mold
- 110: multi-chamber container
- 110a: first container
- 110b: second container
- 111: neck portion
- 112: body portion
- 113: bottom portion
- 115a: first preform
- 115b: second preform
- 137b: neck mold
- 137b1: first holding unit
- 137b2: second holding unit

## Claims

1. An apparatus for manufacturing a resin container having a container body and an additional structure integrated with the container body, the apparatus for manufacturing a resin container comprising:
one injection molding unit that injection-molds a bottomed tubular preform as a first resin material;
the other injection molding unit that injection-molds the additional structure as a second resin material;
a blow molding unit that blow-molds the preform integrated with the additional structure in a state of having residual heat from injection molding to manufacture the resin container; and
a conveyor that moves in an order from the one injection molding unit to the other injection molding unit or in an order from the other injection molding unit to the one injection molding unit and conveys the preform integrated with the additional structure to the blow molding unit.

2. The apparatus for manufacturing a resin container according to claim 1, wherein the additional structure is any one of a handle, a hanging tool, a lid connected to a container body, a label tag, and a band capable of coupling two or more of the resin containers.

3. The apparatus for manufacturing a resin container according to claim 2, wherein the additional structure is attached to an outer periphery of the preform via an annular attachment base portion.

4. The apparatus for manufacturing a resin container according to claim 1, wherein
the conveyor includes a holding unit that holds a neck portion of the preform,
in the one injection molding unit, the preform is injection-molded in the holding unit, and
in the other injection molded portion, the additional structure is injection-molded in an outer peripheral portion of the preform held by the holding unit.

5. The apparatus for manufacturing a resin container according to claim 1, wherein
the conveyor includes a holding unit capable of holding the additional structure,
in the other injection molding unit, the additional structure is injection-molded in the holding unit, and
in the one injection molding unit, the preform is injection-molded with respect to the holding unit in a state where the additional structure is held.

6. An apparatus for manufacturing a resin multi-chamber container in which a first container and a second container having different characteristics are integrated, the apparatus for manufacturing a resin multi-chamber container comprising:
a first injection molding unit that injection-molds a first preform having a bottomed tubular shape and made of resin;
a second injection molding unit that injection-molds a second preform having a bottomed tubular shape, made of resin, and having characteristics different from those of the first preform; and
a blow molding unit that manufactures a multi-chamber container including the first container in which the first preform is blow-molded and the second container in which the second preform is blow-molded,
wherein the blow molding unit disposes the first preform and the second preform in the same mold in a state of having residual heat from injection molding, and blow-molds the first preform and the second preform simultaneously to integrate the first container and the second container in the mold.

7. The apparatus for manufacturing a resin multi-chamber container according to claim 6, wherein the first container and the second container have different characteristics of at least one of a color, a material, and a neck shape of the container.

8. The apparatus for manufacturing a resin multi-chamber container according to claim 7, further comprising a conveyor that includes a first holding unit that holds a neck portion of the first preform and a second holding unit that holds a neck portion of the second preform, and sequentially moves the first injection molding unit, the second injection molding unit, and the blow molding unit, wherein
in the first injection molding unit, the first preform is injection-molded in the first holding unit,
in the second injection molding unit, the second preform is injection-molded in the second holding unit, and
a pair of the first preform and the second preform held by the conveyor is disposed in the mold of the blow molding unit.

9. The apparatus for manufacturing a resin multi-chamber container according to claim 8, wherein the second injection molding unit has an accommodation space for accommodating the first preform held by the first holding unit.

10. The apparatus for manufacturing a resin multi-chamber container according to claim 9, further comprising a temperature adjustment unit that simultaneously adjusts temperatures of the first preform and the second preform at a subsequent stage of the second injection molding unit.

11. A method for manufacturing a resin container having a container body and an additional structure integrated with the container body, the method for manufacturing a resin container comprising:
one injection molding step of injection-molding a bottomed tubular preform as a first resin material;
the other injection molding step of injection-molding the additional structure as a second resin material; and
a blow molding step of blow molding the preform integrated with the additional structure in a state of having residual heat from injection molding to manufacture the resin container,
wherein the preform integrated with the additional structure is conveyed to the blow molding step by moving a conveyor in an order from the one injection molding step to the other injection molding step or in an order from the other injection molding step to the one injection molding step.

12. A method for manufacturing a resin multi-chamber container in which a first container and a second container having different characteristics are integrated, the method for manufacturing a resin multi-chamber container comprising:
a first injection molding step of injection-molding a first preform having a bottomed tubular shape and made of resin;
a second injection molding step of injection-molding a second preform having a bottomed tubular shape, made of resin, and having characteristics different from those of the first preform;
a blow molding step of manufacturing a multi-chamber container including the first container in which the first preform is blow-molded and the second container in which the second preform is blow-molded,
wherein in the blow molding step, the first preform and the second preform are disposed in the same mold in a state of having residual heat from injection molding, and the first preform and the second preform are simultaneously blow-molded to integrate the first container and the second container in the mold.
